# EUROPÄISCHE PATENTSCHRIFT

(11) **EP 1 180 397 B1**
(45) Veröffentlichungstag und Bekanntmachung des Hinweises auf die Patenterteilung: **28.03.2007**
(21) Anmeldenummer: 00117898.7
(22) Anmeldetag: 19.08.2000
(51) Int. Cl.: B01J 23/10, C01F 17/00, B01D 53/94, B01J 35/10

(54) **Sauerstoff speicherndes Material auf der Basis von Ceroxid, Verfahren zu seiner Herstellung und Verwendung in der Abgasreinigung von Verbrennungsmotoren**
Oxygen storage material based on cerium oxide, method for the preparation thereof and use for the purification of exhaust gases of internal combustion engines
Matériau à base de cérium oxide pour le stockage de l'oxygène, procédé de préparation dudit matériau et utilisation pour le traitment des gaz d'échappement des moteurs à combustion interne

(43) Veröffentlichungstag der Anmeldung: 20.02.2002
(73) Patentinhaber: Umicore AG & Co. KG, 63457 Hanau-Wolfgang (DE)
(72) Erfinder: Mussmann, Lothar, Dr., 63067 Offenbach (DE); Lindner, Dieter, Dr., 63457 Hanau (DE); Votsmeier, Martin, Dr., 63477 Maintal (DE); Lox, Egbert, Dr., 63403 Hanau (DE); Kreuzer, Thomas, 61184 Karben (DE)
(74) Vertreter: Stellbrink, Axel

(56) Entgegenhaltungen:
- EP-A- 0 605 274
- EP-A- 0 715 879
- EP-A- 0 778 071
- EP-A- 0 842 900
- EP-A- 0 870 531
- EP-A- 0 870 543
- EP-A- 0 993 860
- EP-A- 1 040 870
- WO-A-00/27527
- US-A- 5 529 969
- PATENT ABSTRACTS OF JAPAN vol. 007, no. 219 (C-188), 29. September 1983 (1983-09-29) & JP 58 114730 A (TOKUYAMA SODA KK), 8. Juli 1983 (1983-07-08) -& DATABASE WPI Week 8333 Derwent Publications Ltd., London, GB; AN 1983-737855 XP002159670

## Beschreibung

Die vorliegende Erfindung betrifft ein Sauerstoff speicherndes Material auf der Basis von Ceroxid sowie ein Verfahren zu seiner Herstellung und seine Verwendung bei der katalytischen Umsetzung von Stoffen, insbesondere bei der Abgasreinigung von Verbrennungskraftmaschinen.

Verbrennungskraftmaschinen emittieren als wesentliche Schadstoffe mit dem Abgas Kohlenmonoxid CO, unverbrannte Kohlenwasserstoffe HC und Stickoxide NOx, die durch moderne Abgasreinigungskatalysatoren zu einem hohen Prozentsatz in die unschädlichen Komponenten Wasser, Kohlendioxid und Stickstoff umgesetzt werden. Die Umsetzung erfolgt im wesentlichen bei stöchiometrischen Bedingungen, das heißt der im Abgas enthaltene Sauerstoff wird mit Hilfe einer sogenannten Lambda-Sonde so eingeregelt, daß die Oxidation von Kohlenmonoxid und Kohlenwasserstoffen sowie die Reduktion der Stickoxide zu Stickstoff nahezu quantitativ erfolgen kann. Die hierfür entwickelten Katalysatoren werden als Dreiwegkatalysatoren bezeichnet. Sie enthalten als katalytisch aktive Komponenten gewöhnlich ein oder mehrere Metalle der Platingruppe des Periodensystems der Elemente auf hochoberflächigen Trägermaterialien wie γ-Aluminiumoxid mit spezifischen Oberflächen von mehr als 50 m²/g.

Stöchiometrische Bedingungen liegen bei Luftzahlen λ von 1 vor. Bei der Luftzahl λ handelt es sich um das auf stöchiometrische Bedingungen normierte Luft/Kraftstoff verhältnis. Das Luft/Kraftstoff-Verhältnis gibt an, wieviel Kilogramm Luft für die vollständige Verbrennung von einem Kilogramm Kraftstoff benötigt werden. Bei üblichen Ottomotor-Kraftstoffen liegt das stöchiometrische Luft/Kraftstoff-Verhältnis bei einem Wert von 14,6. Unterstöchiometrische Abgaszusammensetzungen mit λ<1 werden als fett und überstöchiometrische Zusammensetzungen mit λ>1 werden als mager bezeichnet.

Das Motorabgas weist je nach Last und Drehzahl mehr oder weniger starke periodische Schwankungen der Luftzahl um den Wert 1 herum auf. Zur besseren Umsetzung der oxidierbaren Schadstoffkomponenten unter diesen dynamischen Bedingungen werden Sauerstoff-Speicherkomponenten wie zum Beispiel Ceroxid eingesetzt, welches Sauerstoff durch Änderung des Oxidationszustandes von Ce³⁺ nach Ce⁴⁺ bindet, wenn er im Überschuß vorhanden ist und ihn für die oxidative Umsetzung durch Übergang von Ce⁴⁺ nach Ce³⁺ wieder abgibt, wenn der Sauerstoff im Abgas im Unterschuß vorliegt.

Autoabgaskatalysatoren werden mit Abgastemperaturen von bis zu 1100 °C belastet. Diese hohen Temperaturen erfordern die Verwendung entsprechend temperaturbeständiger und langzeitstabiler Materialien für die Katalysatoren.

Die EP 0 207 857 B1 beschreibt eine Masse auf der Basis von Ceroxid, die im wesentlichen Ceroxid und einen Zusatz, bestehend aus mindestens einem der Oxide der Metalle A aus der Gruppe Aluminium, Silicium, Zirkonium und Thorium, enthält. Die Masse ist mit einer spezifischen Oberfläche von mehr als 10 m²/g beständig bis zu einer Brenntemperatur von 900 °C.

Die EP 0 444 470 A1 beschreibt ein hochoberflächiges Ceroxid welches aus einem innigen Gemisch von Ceroxid mit 5 bis 25 Mol.-%, bezogen auf die Mole Ceroxid, eines Ceroxid-Stabilisators besteht. Als Stabilisatoren werden Lanthan, Neodym und Yttrium genannt. Das Material wird durch Co-Präzipitation aus einer gemeinsamen Lösung eines Ceroxidvorläufers und eines Vorläufers des Ceroxidstabilisators und nachfolgende Calcinierung in Luft bei Temperaturen über 500 °C erhalten. Die BET-Oberfläche dieses Materials beträgt nach einer Calcinierung bei 980 °C für die Dauer von 4 Stunden noch mehr als 20 m²/g.

Die EP 0 337 809 A2 beschreibt eine Katalysatorzusammensetzung, die unter anderem mit Ceroxid stabilisierte Zirkonoxidpartikel enthält. Die Zirkonoxidpartikel werden mit Ceroxid stabilisiert, indem Zirkonoxid mit einer Cersalzlösung getränkt wird. Die daraus erhaltenen, getränkten Teilchen werden getrocknet und calciniert bis die graphische Darstellung des Röntgenbeugungsspektrums keinen Peak der kristallinen Form des Ceroxids mehr zeigt. Das Ceroxid liegt in der Ceroxid/Zirkonoxid-Mischung in einer Menge von 10 bis 50 Gew.-% bezogen auf das Zirkonoxid vor. Zusätzlich zum Cersalz kann auch ein Yttrium- und/oder Calciumsalz eingesetzt werden. Das Material zeigt nach einer 10-stündigen Calcinierung in Luft bei einer Temperatur von 900 °C im Röntgenbeugungsspektrum nur einen Peak des tetragonalen Zirkonoxids und keinen Peak des Ceroxids. Ceroxid liegt also bei diesem Material im wesentlichen in Form einer festen Lösung mit dem Zirkonoxid vor.

Die EP 0 827 775 A1 beschreibt ein Sauerstoff speicherndes Mischoxid. Das Mischoxid besteht aus Ceroxid oder einem Cer/Zirkon-Mischoxid, welches mit Praseodymoxid beladen ist. Das Molverhältnis zwischen Praseodym und Cer im Mischoxid liegt zwischen 1:4 und 4:1.

Die WO 98/42437 beschreibt eine Katalysatorzusammensetzung, die ein Mischoxid aus Cer und Praseodym und gegebenenfalls ein oder mehrere weitere Seltenerdoxide enthält. Das Atomverhältnis Pr:Ce liegt im Bereich zwischen 2:100 und 100:100. Das Mischoxid kann durch Co-Präzipitation oder durch Imprägnieren von Ceroxid-Partikeln mit einer Praseodym-Vorläuferverbindung und anschließender Calcinierung in Luft erhalten werden und weist gegenüber reinem Ceroxid eine verbesserte Sauerstoffspeicherfähigkeit auf.

Die WO 98/45027 beschreibt eine weitere Katalysatorzusammensetzung, die ein Sauerstoff speicherndes Material mit verbesserter Sauerstoffspeicherfähigkeit enthält. Das Sauerstoff speichernde Material ist ein Mischoxid, welches Oxide des Cers, Neodyms und Zirkons enthält. Das Material kann durch Co-Präzipitation von Verbindungen des Zirkons und der Seltenerdmetalle und nachfolgendem Calcinieren in Luft erhalten werden.

Das Dokument EP-A-0 778 071 offenbart ein Sauerstoff speicherndes Material auf der Basis von CeO₂ und wenigstens ZrO₂ als weiterem Metalloxid, wobei die Oxide in Form eines Mischoxids vorliegen, dadurch erhältlich, daß ein vorgefertigtes Oxid/Hydroxid/Carbonat-Gemisch des Ce und des Zr einer reduzierenden Hochtemperatur-Behandlung bevorzugt bei 800-1300°C unterzogen wird, insbesondere ein Material mit einer spezifischen Oberfläche von 80 m²/g für 5 h bei 600 oder 800°C. Die Behandlung kann bevorzugt in einer H₂-enthaltenden Atmosphäre stattfinden. Die Materialien finden Verwendung für die Herstellung von Abgasreinigungskatalysatoren für Verbrennungsmotoren.

Das Dokument US-A-5 529 969 offenbart ein Material auf der Basis von CeO₂ und SiO₂, wobei die Oxide in Form eines Mischoxids vorliegen, dadurch erhältlich, daß ein vorgefertigtes Oxid/Hydroxid/Carbonat-Gemisch des Ce und des Si mit einem Glühverlust von mehr als 2 Gew.-% (insbesondere 20 Gew.-%) und einer spezifischen Oberfläche von mehr als 80 m²/g (insbesondere 85 m²/g) bei einer Temperatur zwischen 600 und 900 °C (insbesondere 800 °C) für die Dauer von 1 bis 10 h (insbesondere 6 h) nachbehandelt wird. Eine H₂-enthaltende Atmosphäre für die Nachbehandlung ist nicht offenbart. Die Materialien finden Verwendung für die Herstellung von Katalysatoren, insbesondere Katalysatorträgern für die Abgasreinigung von Verbrennungsmotoren.

Die bekannten Sauerstoff speichernden Materialien werden in Dreiwegkatalysatoren für die Reinigung der Abgase von stöchiometrisch betriebenen Verbrennungsmotoren eingesetzt. Ein wesentliches Kriterium für die Beurteilung dieser Materialien ist dabei ihre Fähigkeit, die Umsetzung von Kohlenmonoxid und Stickoxiden unter den dynamischen Bedingungen im Abgas zu verbessern. Ein Maß für die dynamische Umsetzung ist der Kreuzungspunkt der Umsatzkurven für Kohlenmonoxid und Stickoxide, der sogenannte "Cross-Over"-Punkt, bei periodisch zwischen fett und mager variierenden Abgaszusammensetzungen. Die im Kreuzungspunkt gemessene Umsetzung ist die höchste Umsetzung, die für Kohlenmonoxid und Stickoxide gleichzeitig erhalten werden kann und ist ein Maß für die Geschwindigkeit, mit der es dem eingesetzten Sauerstoff-Speichermaterial möglich ist, von einem Oxidationszustand in den anderen zu wechseln. Diese Eigenschaft des Speichermaterials wird im folgenden als Dynamik bezeichnet. Je höher der Umsatz im Kreuzungspunkt ist, um so besser ist auch das dynamische Verhalten des betrachteten Katalysators.

Aufgabe der vorliegenden Erfindung ist es, ein Sauerstoff speicherndes Material anzugeben, welches ein besseres dynamisches Verhalten aufweist als die bisher beschriebenen Materialien. Weitere Gegenstände dieser Erfindung sind ein Verfahren zur Herstellung dieses Materials sowie die Verwendung des Materials in Abgasreinigungskatalysatoren für Verbrennungskraftmaschinen.

Diese Aufgabe wird gelöst durch ein Sauerstoff speicherndes Material gemäß Anspruch 1.

Unter einem Mischoxid wird im Rahmen dieser Anmeldung ein Material aus wenigstens zwei Oxiden verstanden, die im molekularen Maßstab innig vermischt vorliegen und eine einphasige Kristallstruktur zeigen.

Das erfindungsgemäße Material unterscheidet sich von den bekannten Mischoxiden auf der Basis von Ceroxid durch eine deutlich verbesserte Mobilität des Sauerstoffs im Kristallgitter und eine damit verbundene bessere Dynamik bei dem im stöchiometrisch zusammengesetzten Abgas ablaufenden Redox-Prozess zwischen seinen oxidierenden und reduzierenden Bestandteilen.

Zur Herstellung des Materials werden zunächst in einem an sich bekannten naßchemischen Verfahren hydroxidische Vorstufen des Mischoxids gebildet. Ein geeignetes naßchemische Verfahren hierfür ist zum Beispiel die Co-Thermohydrolyse von wässrigen Lösungen von Salzen des Cers und des Zirkons und/oder des Siliciums. So können wässrige Lösungen von Cernitrat und Zirkonylnitrat durch Temperaturerhöhung im Autoklaven hydrolysiert werden. Ein weiteres, naßchemisches Verfahren zur Herstellung der hydroxidischen Vorstufen ist die sogenannte Co-Fällung. Hierbei werden Salze des Cers und des Zirkons und/oder des Siliciums in einer wässrigen Lösung durch Zugabe einer Base in Form von Hydroxiden ausgefällt. Weitere, geeignete Verfahren werden zum Beispiel in der EP 0 207 857 B1 und in der EP 0 444 470 A1 beschrieben.

Die hydroxidischen Vorstufen werden von den Reaktionsmedien abgetrennt und können dann bei Temperaturen zwischen 80 und 300 °C getrocknet werden. Diese Behandlung führt zu einem teilweise amorphen Oxid/Hydroxid/Carbonat-Gemisch, welches infolge seines Hydroxid- und Carbonatgehaltes einen Glühverlust von wenigstens 2 Gew.-% aufweist. Bevorzugt wird die Trocknung so geführt, daß der Glühverlust wenigsten 4, insbesondere wenigstens 6 Gew.-% beträgt. Der maximale Glühverlust dieses Oxid/Hydroxid/Carbonat-Gemisches überschreitet gewöhnlich nicht 20 Gew.-%. Seine spezifische Oberfläche (BET-Oberfläche, gemessen nach DIN 66132) weist wenigstens 80, in der Regel mehr als 140 und häufig sogar mehr als 200 m²/g auf.

Zur Überführung dieser Vorstufen in das erfindungsgemäße Material werden sie einer Temperaturbehandlung unter reduzierenden Bedingungen unterworfen, d.h. einer Temperaturbehandlung bei 600 bis 900 °C für die Dauer von 1 bis 10 Stunden, z.B. unter Formiergas (95 Vol.-% Stickstoff + 5 Vol.-% Wasserstoff). Es hat sich überraschenderweise gezeigt, daß diese Temperaturbehandlung dem Sauerstoff speichernden Material ein besseres dynamisches Verhalten verleiht als eine Calcinierung unter oxidierenden Bedingungen, wie sie aus dem Stand der Technik bekannt ist.

Durch die thermische Behandlung unter reduzierenden Bedingungen vermindert sich auch die spezifische Oberfläche des Materials. Die Dauer und Temperatur der Temperaturbehandlung sollten dabei so geführt werden, daß die spezifische Oberfläche des fertigen Materials nicht weniger als 20, bevorzugt nicht weniger als 40 m²/g, beträgt.

Nach dem derzeitigen Verständnis der Erfindung beruht die verbesserte Dynamik des erfindungsgemäßen Materials darauf, daß die thermische Behandlung mit Wasserstoff eine Restrukturierung und veränderte Ausrichtung der Komponenten des Mischoxids im Kristallgitter ermöglicht. Die Struktur des erfindungsgemäßen Mischoxids weist gegenüber der durch Calcinierung an Luft erhältlichen Struktur eine erhöhte Fernordnung in den Primärkristalliten auf, die die Mobilität von Sauerstoff im Kristallgitter und damit die Geschwindigkeit des Redox-Zyklus erhöht.

Bevorzugt enthält das erfindungsgemäße Material 20 bis 99 Gew.-% Ceroxid, bezogen auf das Gesamtgewicht des Materials. Besonders bevorzugt enthält das Material 60 bis 90 Gew.-% Ceroxid und 40 bis 10 Gew.-% Zirkonoxid.

Statt das Oxid/Hydroxid/Carbonat-Gemisch selbst herzustellen, kann auch ein vorgefertigtes, käufliches Oxid/Hydroxid/Carbonat-Gemisch nachträglich in das erfindungsgemäße Material durch die genannte, reduktive Temperaturbehandlung überführt werden. Hierbei werden ebenfalls Temperaturen zwischen 600 und 900 °C für die Dauer von 1 bis 10 Stunden angewendet. Wichtig ist dabei, daß das käufliche Material noch einen Glühverlust von wenigstens 2 Gew.-% und eine spezifische Oberfläche von mehr als 80 m²/g aufweist. Ein Glühverlust von mehr als 2 Gew.-% in Verbindung mit einer entsprechend hohen, spezifischen Oberfläche ist ein Indiz dafür, daß das Material bisher noch nicht einer zu starken Calcinierung an Luft unterworfen wurde und sich deshalb noch durch eine reduktive Temperaturbehandlung in seinen dynamischen Eigenschaften verbessern lässt. Eine nachträgliche, reduktive Temperaturbehandlung von Sauerstoff speichernden Materialien mit einem Glühverlust von weniger als 2 Gew.-% führt erfahrungsgemäß nicht zu einer Verbesserung ihrer dynamischen Eigenschaften.

Die Kombination von Glühverlust und spezifischer Oberfläche, bei der durch eine Temperaturbehandlung unter reduzierenden Bedingungen noch eine ausreichende Verbesserung der Materialeigenschaften erzielt werden kann, ist vom Material abhängig. Bei Cer/Zirkon-Mischoxiden hat sich gezeigt, daß dies bei Glühverlusten von mehr als 6 Gew.-% und spezifischen Oberflächen von mehr als 140 m²/g der Fall ist.

In einer bevorzugten Ausführungsform des erfindungsgemäßen Materials enthält es noch zusätzlich 0,5 bis 20 Gew.-% wenigstens eines der Metalle aus der Gruppe Yttrium, Scandium, Lanthan, Praseodym, Neodym, Samarium, Gadolinium und Terbium, berechnet als Oxid. Diese Dotierungszusätze erhöhen die thermische Stabilität des Sauerstoff speichernden Materials und können auch die Mobilität der Sauerstoffionen im Kristallgitter durch zusätzliche Defektstellen im Gitter weiter verbessern.

Die Erfindung wird an Hand der folgenden Beispiele näher erläutert. In den Beispielen wurden konventionelle Wabenkörper aus Cordierit (Zelldichte: 62 cm⁻²) mit katalytisch aktiven Beschichtungen unter Verwendung verschiedener Sauerstoff speichernder Materialien auf der Basis von Cer/Zirkon-Mischoxiden beschichtet und bezüglich ihrer katalytischen Aktivität untersucht.

Es zeigen
- **Figur 1:**: Ergebnisse von TPR-Messungen an einem erfindungsgemäßen Material
- **Figur 2:**: Ergebnisse von TPR-Messungen an einem Vergleichs-Material

Zur Anfertigung der Katalysatoren wurden die im folgenden aufgeführten, kommerziellen Rohstoffe verwendet. Es kamen unter anderem drei Qualitäten eines Cer/Zirkon-Mischoxids mit einem Zirkonoxidgehalt von jeweils etwa 30 Gew.-%, bezogen auf das Gesamtgewicht des Mischoxids, zum Einsatz. Bei dem mit CeO₂/ZrO₂ I bezeichneten Cer/Zirkon-Mischoxid handelte es sich um ein co-gefälltes Material, welches während der Produktion nur im geringen Maße an Luft calciniert worden war und dementsprechend eine relativ hohe spezifische Oberfläche von 220 m²/g aufwies. Der Glühverlust betrug 10,1 Gew.-%. CeO₂/ZrO₂ II und CeO₂/ZrO₂ III waren ebenfalls co-gefällte Mischoxide, die jedoch schon während der Produktion einer stärkeren Calcinierung an Luft unterworfen worden waren und dementsprechend nur spezifische Oberflächen von 121, beziehungsweise von 77 m²/g, aufwiesen.

| | |
|---|---|
| **La/Al₂O₃:** | γ-Aluminiumoxid, stabilisiert mit 3 Gew.-% Lanthan, berechnet als |
| | Lanthanoxid; BET-Oberfläche im Lieferzustand: 140 m²/g; mittlere |
| | Korngröße im Lieferzustand: d₅₀ ≈ 15 µm; |
| **(Al,Ce,Zr)-Oxid:** | Mischoxid aus Aluminiumoxid und 30 Gew.-% Ceroxid und 30 |
| | Gew.-% Zirkonoxid, bezogen auf das Gesamtgewicht des |
| | Mischoxids; BET-Oberfläche im Lieferzustand: 102 m²/g; mittlere |
| | Korngröße im Lieferzustand: d₅₀≈ 28 µm; |
| **γ-Al₂O₃:** | reines gamma-Aluminiumoxid; BET-Oberfläche im Lieferzustand: |
| | 140 m²/g; mittlere Korngröße im Lieferzustand: d₅₀ ≈ 15 µm; |
| **CeO₂/ZrO₂ I:** | co-gefälltes Cer/Zirkon-Mischoxid mit 70 Gew.% Ceroxid |
| | BET-Oberfläche im Lieferzustand: 220 m²/g; |
| | Glühverlust: 10,1 Gew.-% |
| | mittlere Korngröße im Lieferzustand: d₅₀ ≈ 10 µm; |
| **CeO₂/ZrO₂ II:** | co-gefälltes Cer/Zirkon-Mischoxid mit 70 Gew.-% Ceroxid |
| | BET-Oberfläche im Lieferzustand: 121 m²/g; |
| | Glühverlust: 5,4 Gew.-% |
| | mittlere Korngröße im Lieferzustand: d₅₀≈16 µm; |
| **CeO₂/ZrO₂ III:** | co-gefälltes Cer/Zirkon-Mischoxid mit 70 Gew.-% Ceroxid |
| | BET-Oberfläche im Lieferzustand: 77 m²/g; |
| | Glühverlust: 3,5 Gew.-% |
| | mittlere Korngröße im Lieferzustand: d₅₀ ≈ 16 µm; |
| **BaO:** | Bariumoxid, technisch |
| **Pd(NO₃)₂:** | Palladiumnitrat |
| **Rh(NO₃)₃:** | Rhodiumnitrat |
| **Wabenkörper:** | Cordierit; 62 Zellen/cm²; Volumen: 0,618 1; |
| | Abmessungen: 101,6 mm ∅; 76,2 mm Länge |

### Sauerstoffspeicherfähigkeit:

In einem Vorversuch wurde die Sauerstoffspeicherfähigkeit des erfindungsgemäßen Materials mit dem konventionellen Sauerstoff speichernden Material CeO₂/ZrO₂ II verglichen. Das erfindungsgemäße Material wurde durch Temperaturbehandlung von CeO₂/ZrO₂ I bei 900 °C für die Dauer von 6 Stunden unter Formiergas gewonnen. Beide Materialien wurden unter Anwendung der Porenvolumenimprägnierung mit Palladiumnitrat imprägniert und anschließend 2 Stunden bei 500 °C an Luft calciniert. Durch die Calcinierung an Luft wurden die Materialien mit Sauerstoff abgesättigt. Der fertigen Materialien enthielten 2 Gew.-% Pd, bezogen auf ihr Gesamtgewicht.

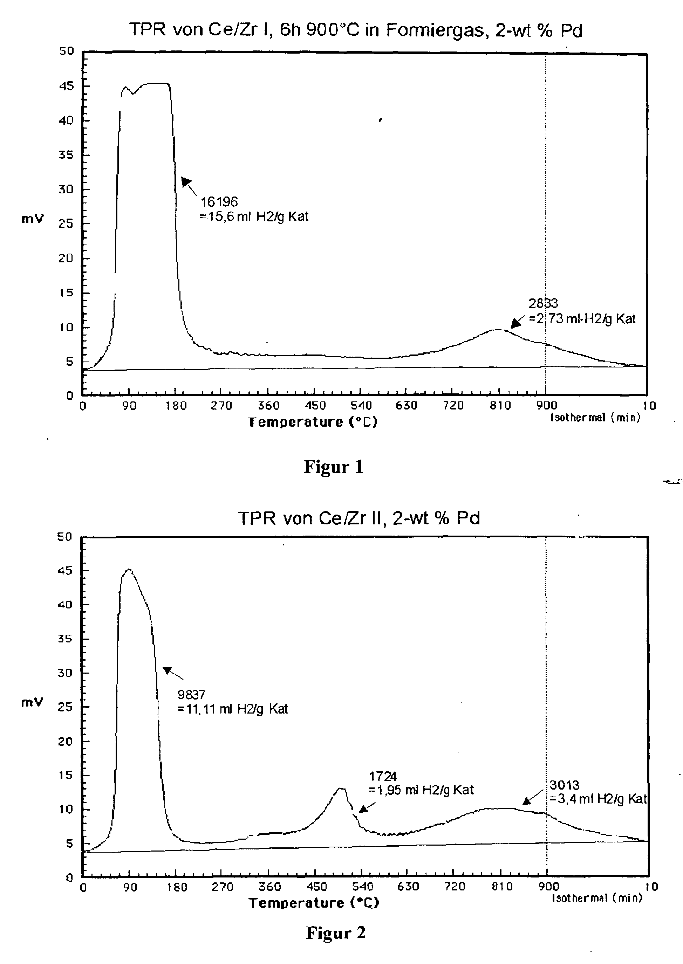

Zur Bestimmung der Sauerstoffspeicherfähigkeit wurden beide Materialproben einer TPR-Messung (Temperature Programmed Reduction) unterzogen. Das TPR-Spektrum wurde in einer Argon/Wasserstoff-Atmosphäre (5 Vol.-% Wasserstoff) aufgenommen. Die Materialproben wurden von Raumtemperatur mit einer Rate von 20 °C/min bis auf 900 °C aufgeheizt und der dabei auftretende Wasserstoffverbrauch durch Reaktion mit dem abgespeicherten Sauerstoff gemessen. Die Ergebnisse dieser Messungen sind in Figur 1 für das erfindungsgemäße Material und in Figur 2 für das Vergleichs-Material grafisch dargestellt.

Im Temperaturbereich zwischen Raumtemperatur und 270 °C zeigt das erfindungsgemäße Material einen Wasserstoffverbrauch von 15,6 ml H₂/g Katalysator, während das konventionelle CeO₂/ZrO₂ II nur einen Wasserstoffverbrauch von 11,1 ml H₂/g Katalysator aufweist. Der gesamte Wasserstoffverbrauch bis zu einer Temperatur von 900 °C betrug bei dem konventionellen Material 15,5 ml H₂/g Katalysator und beim erfindungsgemäßen Material 18,3 ml H₂/g Katalysator.

Diese Messungen zeigen, daß das erfindungsgemäße Material schon bei tiefen Temperaturen eine um 40% höhere Verfügbarkeit des eingespeicherten Sauerstoffs aufweist. Außerdem besitzt es eine etwa um 20% höhere Sauerstoffspeicherfähigkeit über den gesamten Temperaturbereich von Raumtemperatur bis 900 °C.

### Vergleichsbeispiel 1:

Es wurde eine wässrige Beschichtungssuspension angefertigt, die La/Al₂O₃, CeO₂/ZrO₂I und BaO im Mengenverhältnis 6:6:1 enthielt. Der Feststoffgehalt der Dispersion betrug 45 Gew.-%. Die Suspension wurde in einer Mühle so lange homogenisiert, bis die mittlere Korngröße der Feststoffe etwa 2 - 3 µm betrug.

Ein Wabenkörper wurde durch Tauchen in diese Dispersion beschichtet. Die Beschichtung wurde 1 Stunde bei 120 °C getrocknet und anschließend für die Dauer von 2 Stunden bei 500 °C an Luft calciniert. Anschließend wurde die Beschichtung mit einer Lösung von Palladiumnitrat imprägniert, erneut getrocknet und calciniert. Die fertige Schicht enthielt die folgenden Beschichtungsmengen:

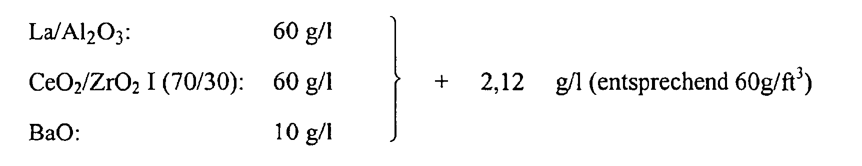

Der so hergestellte Katalysator wird im folgenden mit VK1 bezeichnet.

### Vergleichsbeispiel 2:

Es wurde ein weiterer Katalysator entsprechend Vergleichsbeispiel 1 hergestellt. Statt CeO₂/ZrO₂ I wurde jedoch CeO₂/ZrO₂II verwendet. Der so hergestellte Katalysator wird im folgenden mit VK2 bezeichnet.

### Vergleichsbeispiel 3:

Es wurde ein weiterer Katalysator entsprechend Vergleichsbeispiel 1 hergestellt. Statt CeO₂/ZrO₂ I wurde jedoch CeO₂/ZrO₂ III verwendet. Der so hergestellte Katalysator wird im folgenden mit VK3 bezeichnet.

### Beispiel 1:

Es wurde ein weiterer Katalysator entsprechend Vergleichsbeispiel 1 hergestellt. Das CeO₂/ZrO₂I wurde jedoch vor seiner Verwendung für die Dauer von 6 Stunden einer reduzierenden Behandlung bei 900 °C im Formiergas unterworfen. Der so hergestellte Katalysator wird im folgenden mit K1 bezeichnet.

### Anwendungsbeispiel 1:

Alle vier Katalysatoren wurden einer hydrothermalen Alterung bei 985 °C in einer Atmosphäre aus 10 Vol.-% Wasser, 10 Vol.-% Sauerstoff und Rest Stickstoff für die Dauer von 16 Stunden unterzogen. Danach wurden den Katalysatoren Bohrkerne (25,4 mm ∅ und 76,2 mm Länge) entnommen und deren Umsatzraten in einer Modellgasanlage bei drei verschiedenen Temperaturen (350 °C, 400 °C und 450 °C) des Modell-Abgases, einer Raumgeschwindigkeit RG von 225.000 h⁻¹ und einer Luftzahl von λ = 0,99 gemessen. Während der Messungen wurden die Luftzahlen mit einer Frequenz von 1 Hz und einer Amplitude von ± 0,8 A/F moduliert.

Die Zusammensetzung des Modell-Abgases ist in Tabelle 1 und die Ergebnisse der Messungen sind in Tabelle 2 aufgelistet.

**Tabelle 1: Zusammensetzung des Modell-Abgases**

| Gaskomponente | Konzentration | | Gaskomponente | Konzentration | |
|---|---|---|---|---|---|
| CO | 0,7 | Vol.-% | NOx (NO) | 0,2 | Vol.-% |
| H₂ | 0,23 | Vol.-% | CO₂ | 13 | Vol.-% |
| O₂ | 0,65 | Vol.-% | SO₂ | 20 | ppm |
| Propen | 666 | ppm | H₂O | 10 | Vol.-% |
| Propan | 333 | ppm | N₂ | | Rest |

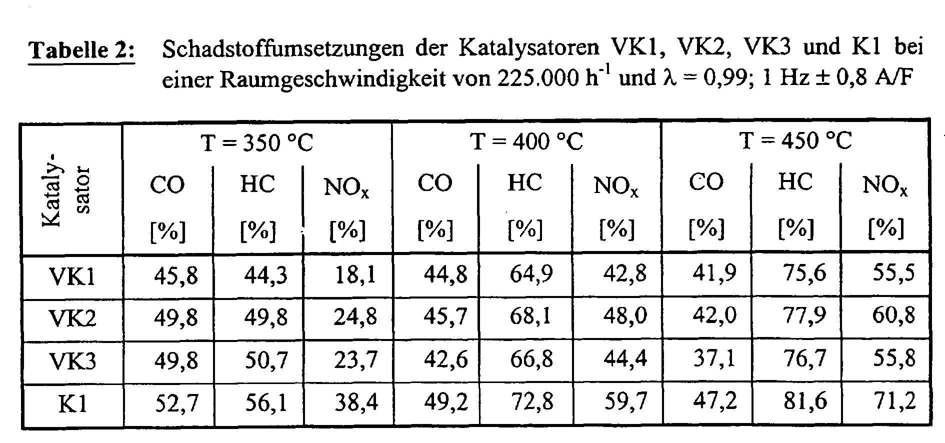

Nach Abschluß dieser Messungen bei der jeweiligen Temperatur wurde die Luftzahl in 5 Minuten durch Anheben des Sauerstoffgehaltes von 0,99 auf 1,01 erhöht. Hierbei wurden die Kreuzungspunkte der CO- und NOx-Umsatzkurven ermittelt. Die gemessenen Werte sind in Tabelle 3 aufgelistet.

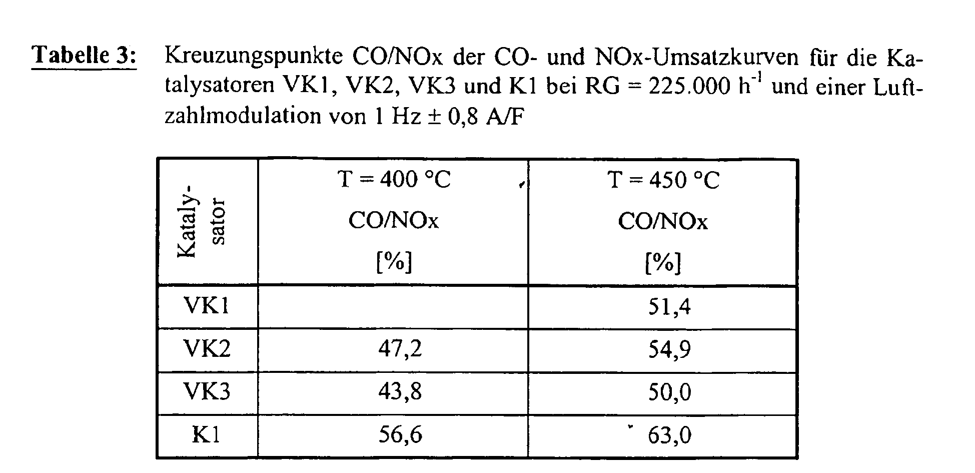

### Vergleichsbeispiel 4:

Es wurde ein zweischichtiger Katalysator auf einem Wabenkörper unter Verwendung der oben angeführten Materialien angefertigt. Die erste Schicht dieses Katalysators liegt direkt auf dem Wabenkörper. Die zweite Schicht ist auf die erste aufgebracht und steht direkt mit dem zu reinigenden Abgas in Kontakt. Die Zusammensetzung des fertigen Katalysators ist der folgenden Aufstellung zu entnehmen:

### Zusammensetzung der ersten Schicht:

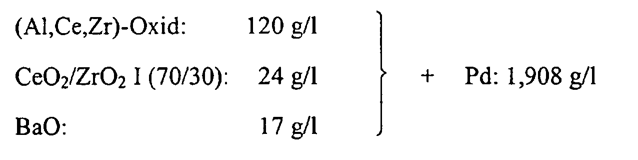

Zur Anfertigung der ersten Schicht wurden die drei oxidischen Materialien in Wasser suspendiert und in einer Mühle homogenisiert. Anschließend wurde Palladium durch Zugabe einer Lösung von Palladiumnitrat auf allen drei Komponenten der Suspension abgeschieden und ein Wabenkörper durch Eintauchen in diese Suspension, Trocknen und Calcinieren des Wabenkörpers beschichtet.

### Zusammensetzung der zweiten Schicht:

| | | |
|---|---|---|
| La/Al₂O3: | 10 g/l | + Rh: 0,212 g/l |
| CeO₂/ZrO₂ I (70/30): | 20 g/l | |
| Al₂O₃: | 30 g/l | |

Zur Anfertigung der zweiten Schicht wurde zunächst La/Al₂O₃ durch Imprägnieren mit Rhodiumnitrat mit Rhodium belegt. Anschließend wurde das katalysierte La/Al₂O₃ zusammen mit den anderen oxidischen Komponenten zu einer Beschichtungssuspension verarbeitet und der Wabenkörper durch Eintauchen in diese Suspension beschichtet. Die Beschichtung wurde wie bei der Anfertigung der ersten Schicht getrocknet und anschließend calciniert.

Der so hergestellte Katalysator wird im folgenden mit VK4 bezeichnet.

### Beispiel 2:

Es wurde ein weiterer Doppelschicht-Katalysator entsprechend Vergleichsbeispiel 4 hergestellt. Das CeO₂/ZrO₂I wurde jedoch vor seiner Verwendung für die Dauer von 6 Stunden einer reduzierenden Behandlung bei 900 °C im Formiergas unterworfen. Der so hergestellte Katalysator wird im folgenden mit K2 bezeichnet.

### Anwendungsbeispiel 2:

Die beiden Katalysatoren VK4 und K2 wurden für die Dauer von 40 Stunden einer zyklischen Fett/Mager-Schnellalterung am Motor unterzogen. Der Alterungszyklus besteht aus vier Phasen. In der ersten Phase wird der Motor für die Dauer von 20 Sekunden mit einem stöchiometrischen Luft/Kraftstoff-Gemisch betrieben. Dementsprechend ist auch das Abgas stöchiometrisch zusammengesetzt (λ_{Abgas} = 1,000). Danach wird der Motor für die Dauer von 16 Sekunden mit einem fetten Luft/Kraftstoff-Gemisch betrieben und die Kohlenmonoxid-Konzentration im Abgas durch entsprechende Verstellung der Motorsteuerung von etwa 0,6 Vol.-% auf 5 Vol.-% angehoben. Nach Ablauf von 6 Sekunden dieser Fettphase wird dem Abgas vor dem Katalysator Sekundärluft zugefügt, um das vom Motor emittierte Kohlenmonoxid auf dem Katalysator zu verbrennen. Durch die dabei freiwerdende Exotherme steigt die Bettemperatur des Katalysators bis auf 1050 °C an. Nach Ablauf der Fettphase wird die Zufuhr von Sekundärluft abgestellt und der Motor für die Dauer von 4 Sekunden wieder mit einem stöchiometrischen Luft/Kraftstoff-Gemisch betrieben. Der Alterungszyklus dauert 40 Sekunden und wird während der gesamten Alterungsdauer von 40 Stunden ständig wiederholt.

Nach Abschluß dieser Alterung wurde das Anspringverhalten und die maximale Schadstoffumsetzung der Katalysatoren am Motorprüfstand vermessen. Hierzu wurden die Katalysatoren bei einer Raumgeschwindigkeit von 50.000 h⁻¹ mit einem realen Abgas, dessen Temperatur mit einer Rate von 15 °C/min von 100 auf 500 °C gesteigert wurde, belastet. Das Abgas wies eine Luftzahl λ=0,999 auf, die mit 1 Hz ± 0,5 A/F (A/F = Luft/Kraftstoff-Verhältnis) moduliert wurde. Die Ergebnisse dieser Messungen sind der Tabelle 4 zu entnehmen.

**Tabelle 4 : Anspringtemperaturen der Katalysatoren und maximaler Schadstoffumsatz**

| Katalysator | CO T_{50%} | HC T_{50%} | NOx T_{50%} | CO T_{90%} | HC T_{90%} | NOx T_{90%} | COₘₐₓ | HCₘₐₓ | NOxₘₐₓ |
|---|---|---|---|---|---|---|---|---|---|
| | [°C] | [°C] | [°C] | [°C] | [°C] | [°C] | [%] | [%] | [%] |
| VK4 | 384 | 373 | 381 | | 391 | 412 | 80 | 95 | 89 |
| K2 | 370 | 359 | 368 | 445 | 496 | 438 | 95 | 96 | 94 |

Die Spalten 2 bis 4 der Tabelle enthalten die Anspringtemperaturen der Katalysatoren, das heißt diejenigen Temperaturen, bei denen der jeweilige Schadstoff zu 50% umgesetzt wird. Die Spalten 5 bis 7 enthalten die entsprechenden Temperaturen für 90% Schadstoffumsetzung. In den Spalten 8 bis 10 sind die maximal gemessenen Schadstoffumsatzgrade angegeben. Man erkennt, daß der unter Verwendung des erfindungsgemäßen, Sauerstoff speichernden Materials hergestellte Katalysator wesentlich niedrigere Anspringtemperaturen und höhere maximale Umsetzungsraten aufweist als der Vergleichskatalysator.

Auch bei diesen Katalysatoren wurden die Kreuzungspunkte der CO- und NOx-Umsatzkurven bei einer Abgastemperatur von 400 °C und einer Raumgeschwindigkeit von 50.000 h⁻¹ am Motorprüfstand gemessen. Dabei wurde die Luftzahl mit einer Frequenz von 1 Hz und einer Amplitude von ± 0,5 A/F moduliert. Die Ergebnisse sind in Tabelle 5 angegeben.

**Tabelle 5: Kreuzungspunkte CO/NOx der CO- und NOx-Umsatzkurven**

| Katalysator | fett → mager | | mager → fett | |
|---|---|---|---|---|
| | CO/NOx | HC | CO/NOx | HC |
| | [%] | [%] | [%] | [%] |
| VK4 | 66 | 88 | 63 | 88 |
| K2 | 72 | 91 | 73 | 91 |

Tabelle 5 enthält die Meßwerte für die Kreuzungspunkte beim Übergang von fettem zu magerem Abgas als auch für den Übergang von magerem zu fettem Abgas.

## Patentansprüche

1. Sauerstoff speicherndes Material auf der Basis von Ceroxid und wenigstens einem weiteren Oxid der Metalle Silicium und Zirkon, wobei das Ceroxid und die weiteren Oxide in Form eines Mischoxids vorliegen,
**dadurch** erhältlich,
daß ein vorgefertigtes Oxid/Hydroxid/Carbonat-Gemisch des Cers und des Zirkons und/oder des Siliciums mit einem Glühyerlust von mehr als 2 Gew.-% und einer spezifischen Oberfläche von mehr als 80 m²/g unter einer Wasserstoff enthaltenden Atmosphäre bei einer Temperatur zwischen 600 und 900 °C für die Dauer von 1 bis 10 Stunden nachbehandelt wird.

2. Sauerstoff speicherndes Material nach Anspruch 1, wobei das Sauerstoff speichernde Material zusätzlich 0,5 bis 20 Gew.-% wenigstens eines der Metalle aus der Gruppe Yttrium, Scandium, Lanthan, Praseodym, Neodym, Samarium, Gadolinium und Terbium, berechnet als Oxid, enthält.

3. Sauerstoff speicherndes Material nach Anspruch 1 oder 2, wobei das Sauerstoff speichernde Material eine spezifische Oberfläche von mehr als 20 m²/g aufweist.

4. Sauerstoff speicherndes Material nach einem der Ansprüche 1 bis 3, wobei das Oxid/Hydroxid/Carbonat-Gemisch
**dadurch** erhältlich ist,
daß man zunächst in an sich bekannter Weise hydroxidische Vorstufen des Mischoxid auf naßchemischem Wege herstellt und diese Vorstufen bei Temperaturen zwischen 80 und 300 °C unter Bildung des Oxid/Hydroxid/Carbonat-Gemisches trocknet.

5. Sauerstoff speicherndes Material nach einem der Ansprüche 1 bis 4, wobei das Sauerstoff speichernde Material 20 bis 99 Gew.-% Ceroxid, bezogen auf sein Gesamtgewicht, enthält.

6. Sauerstoff speicherndes Material nach Anspruch 5, wobei das Sauerstoff speichernde Material 60 bis 90 Gew.-% Ceroxid und 40 bis 10 Gew.-% Zirkonoxid, bezogen auf sein Gesamtgewicht, enthält.

7. Sauerstoff speicherndes Material nach einem der Ansprüche 1 bis 6, wobei der Glühverlust wenigstens 4 Gew.% beträgt.

8. Sauerstoff speicherndes Material nach Anspruch 7, wobei der Glühverlust wenigstens 6 Gew.% beträgt.

9. Verfahren zur Herstellung eines Sauerstoff speicherndes Materials auf der Basis von Ceroxid und wenigstens einem weiteren Oxid der Metalle Silicium und Zirkon, wobei das Ceroxid und die weiteren Oxide in Form eines Mischoxids vorliegen, wobei das Verfahren die folgenden Schritte umfasst:
(iii) Bereitstellen eines vorgefertigten Oxid/Hydroxid/Carbonat-Gemisches des Cers und des Zirkons und/oder des Siliciums mit einem Glühverlust von mehr als 2 Gew.-% und einer spezifischen Oberfläche von mehr als 80 m²/g; und
(iv) Nachbehandeln des Oxid/Hydroxid/Carbonat-Gemisches unter einer Wasserstoff enthaltenden Atmosphäre bei einer Temperatur zwischen 600 und 900 °C für die Dauer von 1 bis 10 Stunden.

10. Verfahren nach Anspruch 9, wobei das vorgefertigte Oxid/Hydroxid/Carbonat-Gemisch bereitgestellt wird durch die folgenden Schritte:
(i) Herstellen von hydroxidischen Vorstufen des Mischoxid auf naßchemischem Wege; und
(ii) Trocknen dieser Vorstufen bei einer Temperatur zwischen 80 und 300 °C unter Bildung des Oxid/Hydroxid/Carbonat-Gemisches.

11. Verwendung des Sauerstoff speichernden Materials nach einem der Ansprüche 1 bis 8 für die Herstellung von Katalysatoren für die Abgasreinigung von Verbrennungsmotoren.

## Claims

1. An oxygen storage material based on cerium oxide and at least one other oxide of the metals silicon and zirconium, wherein the cerium oxide and the other oxides are present in the form of a mixed oxide, which is obtainable by after-treating a pre-made oxide/hydroxide/carbonate mixture of cerium and zirconium and/or silicon having a loss on ignition of more than 2 wt.% and a specific surface area of more than 80 m²/g under a hydrogen-containing atmosphere at a temperature between 600 and 900°C for a period of 1 to 10 hours.

2. The oxygen storage material according to claim 1, wherein the oxygen storage material further contains 0.5 to 20 wt.% of at least one of the metals of the group of yttrium, scandium, lanthanum, praseodymium, neodymium, samarium, gadolinium and terbium, calculated as oxide.

3. The oxygen storage material according to claim 1 or 2, wherein the oxygen storage material has a specific surface area of more than 20 m²/g.

4. The oxygen storage material according to any of claims 1 to 3, wherein the oxide/hydroxide/carbonate mixture is obtainable by first preparing in a known fashion hydroxidic precursors of the mixed oxide using a wet-chemical route and drying these precursors at temperatures between 80 and 300°C with the formation of the oxide/hydroxide/carbonate mixture.

5. The oxygen storage material according to any of claims 1 to 4, wherein the oxygen storage material contains 20 to 99 wt.% cerium oxide, with respect to its total weight.

6. The oxygen storage material according to claim 5, wherein the oxygen storage material contains 60 to 90 wt.% cerium oxide and 40 to 10 wt.% zirconium oxide, with respect to its total weight.

7. The oxygen storage material according to any of claims 1 to 6, wherein the loss on ignition is at least 4 wt.%.

8. The oxygen storage material according to claim 7, wherein the loss on ignition is at least 6 wt.%.

9. A process for the preparation of an oxygen storage material based on cerium oxide and at least one other oxide of the metals silicon and zirconium, wherein the cerium oxide and the other oxides are present in the form of a mixed oxide, wherein the process comprises the following steps:
(iii) providing a pre-made oxide/hydroxide/carbonate mixture of cerium and zirconium and/or silicon having a loss on ignition of more than 2 wt.% and a specific surface area of more than 80 m²/g; and
(iv) after-treating the oxide/hydroxide/carbonate mixture under a hydrogen-containing atmosphere at a temperature between 600 and 900°C for a period of 1 to 10 hours.

10. The process according to claim 9, wherein the pre-made oxide/hydroxide/carbonate mixture is provided by the following steps:
(i) preparing hydroxidic precursors of the mixed oxide using a wet-chemical route; and
(ii) drying the precursors at a temperature between 80 and 300°C with the formation of the oxide/hydroxide/carbonate mixture.

11. Use of the oxygen storage material according to any of claims 1 to 8 for the preparation of catalysts for the purification of exhaust gases of combustion engines.

## Revendications

1. Matériau accumulateur d'oxygène à base d'oxyde de cérium et d'au moins un autre oxyde des métaux silicium et zirconium, l'oxyde de cérium et les autres oxydes se présentant sous forme d'un oxyde mixte, que l'on peut obtenir
en traitant un mélange oxyde/hydroxyde/carbonate de cérium et de zirconium et/ou de silicium déjà préparé avec une perte à la calcination supérieure à 2 % en poids et une surface spécifique supérieure à 80 m²/g dans une atmosphère contenant de l'hydrogène à une température située entre 600 et 900 °C pendant une durée de 1 à 10 heure(s).

2. Matériau accumulateur d'oxygène selon la revendication 1,
contenant, en plus, une teneur de 0,5 à 20 % en poids d'au moins l'un des métaux du groupe : yttrium, scandium, lanthane, praséodyme, néodyme, samarium, gadolinium et terbium, calculée en oxyde.

3. Matériau accumulateur d'oxygène selon la revendication 1 ou 2,
présentant une surface spécifique supérieure à 20 m²/g.

4. Matériau accumulateur d'oxygène selon l'une quelconque des revendications 1 à 3, le mélange oxyde/hydroxyde/carbonate pouvant être obtenu, en commençant, d'une manière connue, par produire des stades antérieurs hydroxydiques de l'oxyde mixte par des voies chimiques humides et en séchant ces stades antérieurs à des températures situées entre 80 et 300°C avec formation du mélange oxyde/hydroxyde/carbonate.

5. Matériau accumulateur d'oxygène selon l'une quelconque des revendications 1 à 4,
contenant une teneur de 20 à 99 % en poids d'oxyde de cérium, rapportée a son poids total.

6. Matériau accumulateur d'oxygène selon la revendication 5,
contenant une teneur de 60 à 90 % en poids d'oxyde de cérium et de 40 à 10 % en poids d'oxyde de zirconium, rapportées à son poids total.

7. Matériau accumulateur d'oxygène selon l'une quelconque des revendications 1 à 6, dont la perte à la calcination est au moins de 4 % en poids.

8. Matériau accumulateur d'oxygène selon le revendication 7, dont la perte à la calcination est au moins de 6 % en poids.

9. Procédé de préparation d'un matériau accumulateur d'oxygène à base d'oxyde de cérium et d'au moins un autre oxyde des métaux silicium et zirconium, l'oxyde de cérium et les autres oxydes se présentant sous forme d'un oxyde mixte, ce procédé comprenant les étapes suivantes:
iü) mise à disposition d'un mélange oxyde/hydroxyde/carbonate de cérium et de zirconium et/ou de silicium déjà préparé avec une perte à la calcination de plus de 2% en poids et une surface spécifique supérieure à 80 m²/g ; et
iv) traitement de ce mélange oxyde/hydroxyde/carbonate dans une atmosphère contenant de l'hydrogène à une température située entre 600 et 900 °C pendant une durée de 1 à 10 heure(s).

10. Procédé selon la revendication 9, selon lequel le mélange oxyyde/hydroxyde/carbonate déjà préparé est préparé selon les étapes suivantes :
i) préparation de stades antérieurs hydroxydiques de l'oxyde mixte par des voies chimiques humides ; et
ii) séchage de ces stades antérieurs à une température située entre 80 et 300 °C avec formation du mélange oxyde/hydroxyde/carbonate.

11. Utilisation du matériau accumulateur d'oxygène selon l'une des revendications 1 à 8, pour la fabrication de catalyseurs destinés à la dépollution des gaz d'échappement des moteurs à combustion interne.
